(19) Europäisches Patentamt
European Patent Office
Office européen des brevets

(11) Numéro de publication : **0 095 428**
**B1**

(12) **FASCICULE DE BREVET EUROPÉEN**

(45) Date de publication du fascicule du brevet : **10.09.86**

(51) Int. Cl.⁴ : **G 21 C 11/08**, G 21 C 13/06

(21) Numéro de dépôt : **83401054.8**

(22) Date de dépôt : **26.05.83**

(54) **Dispositif de refroidissement par gaz de la dalle de fermeture de la cuve d'un réacteur nucléaire.**

(30) Priorité : **26.05.82 FR 8209186**

(43) Date de publication de la demande : **30.11.83 Bulletin 83/48**

(45) Mention de la délivrance du brevet : **10.09.86 Bulletin 86/37**

(84) Etats contractants désignés : **BE DE GB IT LU NL**

(56) Documents cités :
**EP-A- 0 055 643**
**DE-A- 2 113 672**
**DE-A- 2 372 741**
**FR-A- 2 283 522**
**US-A- 3 493 758**

(73) Titulaire : **NOVATOME**
**20 Avenue Edouard Herriot**
**F-92350 Le Plessis Robinson (FR)**

(72) Inventeur : **Malaval, Claude**
**115 bis avenue du Bois de Verrières**
**F-92160 Antony (FR)**

(74) Mandataire : **Bressand, Georges et al**
**c/o CABINET LAVOIX 2 Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

EP 0 095 428 B1

**Description**

L'invention concerne un dispositif de refroidissement de la dalle de fermeture de la cuve d'un réacteur nucléaire refroidi par un métal liquide.

Les réacteurs nucléaires à neutrons rapides comportent généralement une cuve de grande dimension fermée par une dalle horizontale reposant par sa partie périphérique sur le puits de cuve du réacteur à l'intérieur duquel est disposée la cuve. La cuve est généralement fixée à la partie inférieure de la dalle.

La dalle est constituée par une enveloppe métallique de forme annulaire remplie de béton.

La partie centrale de cette dalle annulaire est fermée par le grand bouchon tournant portant l'ensemble des dispositifs permettant la manutention des assemblages combustibles à l'intérieur de la cuve.

Le cœur du réacteur est en effet constitué par des assemblages combustibles disposés côte à côte et verticalement dans la cuve du réacteur, sous le niveau du métal liquide remplissant celle-ci, et généralement constitué par du sodium liquide.

Les composants du réacteur tels que les échangeurs intermédiaires et les pompes, dans le cas des réacteurs intégrés, sont des éléments de grande longueur disposés avec leur axe vertical de façon que leur partie inférieure au moins plonge dans le sodium liquide.

Ces composants traversent la dalle par des ouvertures cylindriques à axe vertical prévues dans celle-ci et la traversant sur toute son épaisseur.

L'enveloppe métallique de la dalle comporte une semelle annulaire inférieure et une semelle annulaire supérieure reliées entre elles par une virole externe de grand diamètre et par une virole interne d'un diamètre correspondant au diamètre du bouchon tournant. Des viroles de passage des composants traversant la dalle sont également fixées à chacune de leurs extrémités sur les semelles de l'enveloppe métallique de cette dalle.

La semelle inférieure de la dalle est en contact direct avec un gaz inerte surmontant le sodium liquide dans la cuve du réacteur. Cette semelle inférieure est donc chauffée à la fois par rayonnement et par convection, le sodium liquide, en contact avec le cœur du réacteur dans la cuve, restant à une température élevée.

De même, les viroles traversant la dalle et permettant le passage des composants sont exposées au gaz inerte recouvrant le sodium liquide et à la chaleur de ce sodium.

Il est donc nécessaire de disposer, au contact de la paroi inférieure de la dalle et au contact des viroles de passage des composants, des moyens de refroidissement très efficaces de ces parois.

On a proposé de disposer des tubes de circulation d'un agent de refroidissement liquide tel que l'eau au contact de la semelle inférieure de la dalle et au contact des viroles de passage des composants.

De tels dispositifs doivent être conçus de façon que de l'eau de refroidissement ne puisse venir en aucun cas au contact du sodium liquide contenu dans la cuve.

Les dispositifs utilisés actuellement sont tels qu'une fissure de la dalle et en particulier de la semelle inférieure de celle-ci ne puisse se propager dans les tubes de refroidissement.

Il existe néanmoins un risque potentiel de mise en contact d'eau et du sodium liquide constituant le fluide primaire du réacteur.

On a proposé, dans le brevet US-A-3 493 758, de réaliser le bouchon tournant d'un réacteur nucléaire refroidi par du métal liquide sous une forme permettant de limiter l'échauffement de sa paroi externe qui est constituée par une double paroi dont l'espace intérieur est rempli de métal liquide. Cependant, la structure résistante du bouchon reste, malgré tout, soumise à des températures très différentes dans ses différentes parties. La plaque inférieure du bouchon est en effet exposée à la surface supérieure du métal liquide dans la cuve alors que la plaque supérieure est à la température ambiante. Des distorsions peuvent en résulter qui, dans le cas d'une structure porteuse telle que la dalle d'un réacteur, ont des conséquences défavorables sur la tenue mécanique de la dalle. Le métal liquide inclus dans la double paroi ne permettrait pas en effet d'assurer un refroidissement suffisant d'une paroi de forte épaisseur faisant partie de la structure de la dalle et exposée au métal liquide remplissant la cuve du réacteur.

On a également proposé, dans la demande de brevet EP-A-10 055 643 non publiée à la date de priorité de la présente demande de brevet, d'effectuer le refroidissement de la dalle par une circulation de gaz qui peut être un gaz inerte ou de l'air.

Pour réaliser un circuit de refroidissement par gaz de la dalle, on a prévu de ménager entre l'enveloppe métallique de cette dalle et le béton de remplissage, un espace pour la circulation du gaz de refroidissement au contact de la surface interne de l'enveloppe métallique de la dalle et sur toute la surface de celle-ci. Dans ce but, le béton de remplissage de la dalle est suspendu à la semelle supérieure par l'intermédiaire de goujons d'ancrage qui traversent l'espace vide de circulation du gaz compris entre la semelle supérieure de la dalle et la surface supérieure du béton. Une circulation de gaz de refroidissement est également prévue autour des viroles de passage des composants, le béton entourant celles-ci ménageant un espace de circulation du gaz de refroidissement.

Une tubulure d'injection et une tubulure de récupération du gaz de refroidissement sont fixées sur la semelle supérieure, l'arrivée et le retour du gaz étant séparés dans l'espace supérieure de circulation par une paroi.

Le gaz de refroidissement qui est généralement de l'azote ou de l'air circule au contact de l'enveloppe de la dalle, à l'intérieur de celle-ci, du béton de remplissage et des goujons d'ancrage.

Ce type de refroidissement qui a l'avantage de ne pas utiliser d'eau a cependant l'inconvénient d'imposer que la masse de béton nécessaire pour la protection contre le rayonnement soit uniquement maintenue en place par des ancrages à la semelle supérieure de la dalle.

En cas de séismes, cette masse de béton suspendue risque d'osciller et de casser les ancrages. Sa chute provoquerait l'écrasement de toute la partie inférieure du circuit de refroidissement situé contre la semelle inférieure et pourrait même détruire les soudures de la semelle inférieure de la dalle, ce qui aurait des conséquences extrêmement graves.

En outre, les dalles de réacteurs nucléaires refroidis par du métal liquide comportent généralement, entre les semelles supérieure et inférieure, des renforts verticaux de direction radiale qui subdivisent l'espace intérieur de la dalle ce qui conduit à subdiviser les circuits de refroidissement. En effet, si l'on traverse des renforts par des trous de communication permettant la circulation du gaz de refroidissement, il est très difficile d'obtenir un équilibrage correct des pertes de charge dans les différentes parties successives du circuit de refroidissement.

Ces circuits indépendants multiples nécessitent donc un grand nombre de tuyaux d'arrivée et de retour de gaz de refroidissement sur la dalle. La structure en est donc complexe et il est difficile d'obtenir une température homogène dans chacune des parties indépendantes.

De plus, la semelle inférieure est à une température intermédiare entre celle du fluide de refroidissement qui est injecté de façon à parvenir d'abord au contact avec cette semelle inférieure, et celle du gaz inerte surmontant le sodium liquide remplissant la cuve, alors que la partie basse du bloc de béton sera à la température du fluide de refroidissement.

En revanche, la semelle supérieure est à la température du fluide de refroidissement à son retour puisqu'elle est calorifugée. La partie supérieure du bloc de béton est également à la température du fluide de refroidissement à son retour.

Il existe donc une différence de température importante entre la semelle inférieure et la semelle supérieure, de même qu'entre les parties haute et basse des blocs de béton qu'on essaie de compenser par des débits de circulation de gaz importants.

En cas de panne du circuit de refroidissement par gaz, la semelle inférieure de la dalle peut s'échauffer fortement et se dilater. Cet échauffement s'accompagne d'une diminution de la limite d'élasticité du matériau constituant la semelle inférieure qui joue un rôle extrêmement important pour la tenue mécanique de la dalle. Elle entraîne d'autre part une flèche vers le bas qui s'ajoute à la flèche due aux charges supportées.

La partie supérieure de la dalle restant relativement froide par rapport à la partie inférieure, une fissuration interne de la dalle peut se produire, en particulier au droit des raidisseurs.

Enfin, si du sodium chaud vient au contact de la semelle supérieure, par exemple dans le cas de fuite d'un composant implanté sur la dalle et si cette semelle supérieure n'est pas suffisamment refroidie, il peut en résulter des déformations et des contraintes extrêmement dommageables pour la tenue de la dalle du réacteur.

Le but de l'invention est donc de proposer un dispositif de refroidissement de la dalle de fermeture de la cuve d'un réacteur nucléaire refroidi par un métal liquide, dalle constituée par une enveloppe métallique annulaire remplie de béton constituant la structure résistante de la dalle, disposée horizontalement et traversée sur toute son épaisseur par des ouvertures cylindriques à axe vertical pour le passage des composants du réacteur plongeant verticalement dans la cuve remplie de métal liquide de refroidissement de ce réacteur, ce dispositif de refroidissement devant éviter l'utilisation d'une structure de dalle particulière où la masse de béton est suspendue à l'enveloppe métallique, de protéger les semelles inférieure et supérieure de la dalle, même dans le cas d'une interruption de la circulation du gaz de refroidissement et d'utiliser un circuit de refroidissement continu et redondant, quelle que soit la structure de renforcement de la dalle.

Dans ce but, le dispositif comporte :

une chemise externe entourant l'enveloppe métallique de la dalle à l'exception de sa partie cylindrique externe par l'intermédiaire de laquelle est assurée la mise en appui de la dalle sur la structure du réacteur et ménageant autour de l'enveloppe de la dalle, un espace de chemisage pour le passage d'un gaz de refroidissement,

des parois cylindriques de chemisage interne des passages de composants reliées à chacune de leurs extrémités à la chemise externe, au niveau d'ouvertures prévues dans celle-ci, l'espace de chemisage des passages de composants communiquant avec l'espace de chemisage de la dalle à chacune de ses extrémités,

plusieurs dispositifs de distribution de gaz de refroidissement dans la partie inférieure de l'espace de chemisage située au-dessous de l'enveloppe de la dalle,

et plusieurs dispositifs de récupération du gaz de refroidisement dans la partie supérieure de l'espace de chemisage située au-dessus de l'enveloppe de la dalle, le gaz de refroidissement passant de la partie inférieure à la partie supérieure de l'espace de chemisage de la dalle par les espaces de chemisage des composants et de la paroi cylindrique interne de l'enveloppe de la dalle.

Afin de bien faire comprendre l'invention, on va maintenant décrire, en se référant aux figures jointes en annexe, un dispositif de refroidissement par gaz de la dalle de fermeture d'un réacteur nucléaire refroidi par du métal liquide.

La figure 1 représente en vue de dessus d'un secteur angulaire d'une dalle de fermeture de la cuve d'un réacteur nucléaire comportant un dispositif de refroidissement suivant l'invention.

La figure 2 représente une demi-vue en coupe par un plan vertical de la dalle, suivant AA de la figure 1.

La figure 3 représente une variante de réalisation d'un dispositif de répartition de gaz représenté à la figure 2.

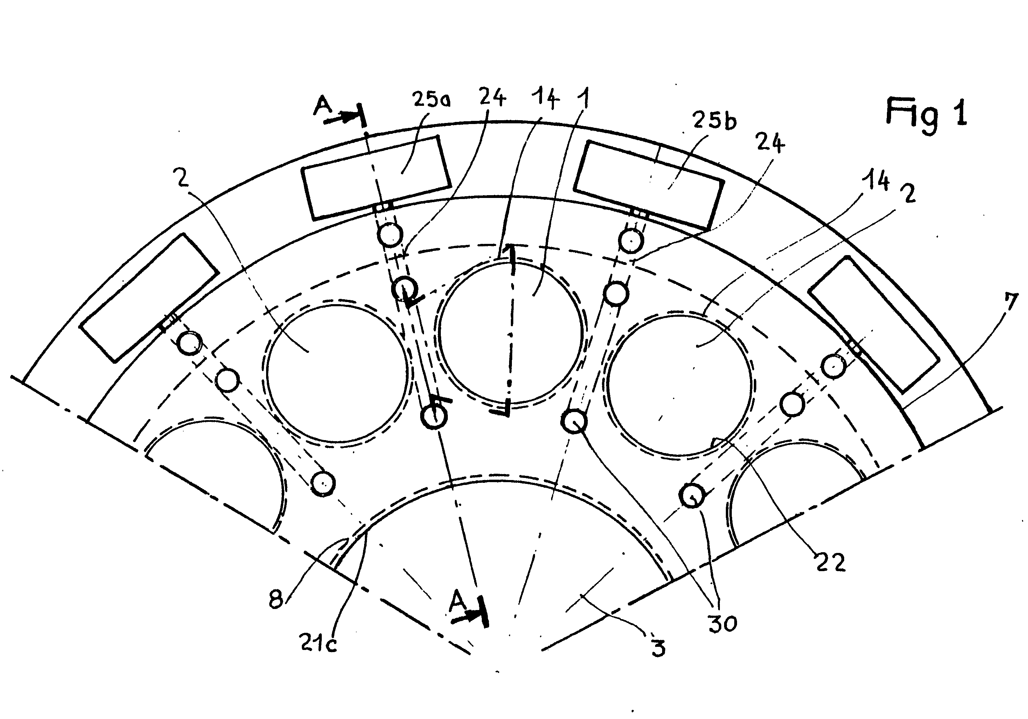

Sur la figure 1, on voit un secteur angulaire de la dalle d'angle 120° représentant donc un tiers de cette dalle. L'ensemble de la dalle comporte quatre passages de pompes telles que 1 et huit passages d'échangeurs tels que 2.

Les pompes assurent la mise en circulation du sodium liquide remplissant la cuve s'échauffant au contact du cœur et se refroidissant dans les échangeurs intermédiaires.

La dalle annulaire ménage, à sa partie centrale, une ouverture cylindrique 3 pour le grand bouchon du réacteur permettant la manutention des assemblages combustibles du cœur.

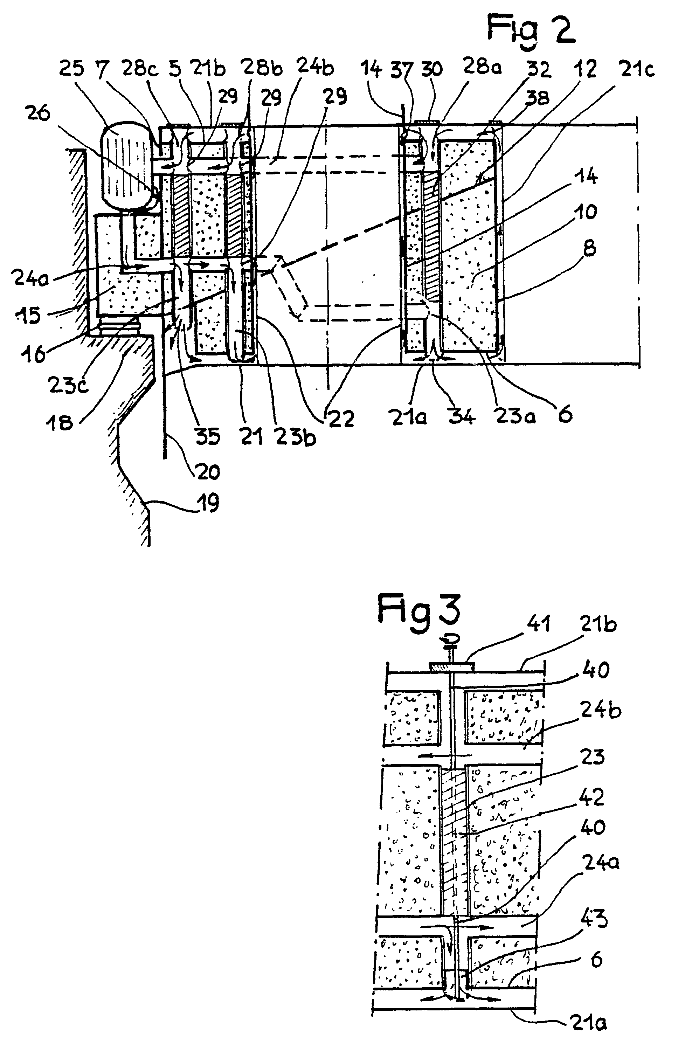

On va maintenant décrire, en se reportant aux figures 1 et 2, le dispositif de refroidissement de la dalle suivant l'invention.

La dalle comporte une enveloppe métallique constituée par une semelle supérieure de forme annulaire 5 et une semelle inférieure également de forme annulaire 6 reliées entre elles par une virole cylindrique externe à grand diamètre 7 et par une virole interne 8 dont le diamètre correspond au diamètre extérieure du grand bouchon tournant.

Le volume interne de l'enveloppe métallique ainsi constituée est occupé par du béton de remplissage 10 assurant la protection biologique du réacteur.

Une virole tronconique 12 fixée, par l'intermédiaire de sa grande base à la partie inférieure de la virole 7 et par sa petite base à la partie supérieure de la virole 8 constitue l'élément de renfort unique de la dalle du réacteur.

Des viroles 14 de passage des composants, telle que la pompe passant dans l'ouverture 1, sont fixées sur la semelle supérieure 5 à l'une de leurs extrémités, et sur la semelle inférieure 6 à leur autre extrémité.

La virole tronconique 12 et les semelles 5 et 6 comportent des ouvertures, au niveau des viroles 14, pour le passage des composants.

Sur une couronne renforcée soudée à la virole externe 7, à la partie inférieure de celle-ci, est fixée une structure d'appui 15 de la dalle reposant, par l'intermédiaire d'un patin d'appui 16, sur la structure 18 du puits de cuve du réacteur.

Sur ce puits de cuve 18 est également fixée la cuve de sécurité 19 alors que la cuve principale 20 est fixée, à sa partie supérieure et par soudage à la virole 7 et sur la virole tronconiquie de renforcement 12.

Le volume intérieur de la dalle situé en-dessous de la virole 12 et à la périphérie de cette dalle ne renferme pas de béton dans la zone où est fixée la cuve principale 20. Nous verrons que cette disposition permet un refroidissement de la paroi de la cuve 20.

Le dispositif de refroidissement suivant l'invention est constitué par une chemise externe 21 entourant la dalle et ménageant avec l'enveloppe métallique de celle-ci un espace de chemisage pour la circulation d'un gaz de refroidissement.

Cette chemise externe comporte une partie inférieure 21a et une partie supérieure 21b annulaires ainsi qu'une virole cylindrique 21c joignant ces deux parties annulaires.

La partie inférieure 21a est soudée, le long de son contour extérieur circulaire, à la surface interne de la cuve principale 20 et, le long de son contour intérieur, à la virole 21c. Cette partie 21a constitue la chemise externe de la semelle inférieure 6 ménageant avec celle-ci un espace de passage du gaz de refroidissement.

La partie supérieure 21b de la chemise externe est soudée suivant son contour externe à un prolongement de la virole 7 et suivant son contour interne à la virole 21c.

A l'intérieur de chacun des trous de passage de composants tels que 1 et 2 est placée une virole de chemisage 22 ménageant avec la virole de passage 14 un espace de circulation du gaz de refroidissement.

Les viroles 22 sont soudées à l'une de leurs extrémités sur la partie inférieure du chemisage 21a et à leur autre extrémité sur la partie supérieure 21b de la chemise 21 au niveau d'ouvertures permettant le passage des composants.

La chemise 21 et les viroles de chemisage 22 constituent donc un ensemble ménageant avec les surfaces de la dalle et des passages de composants un espace de circulation du gaz de refroidissement.

Cependant, la surface externe cylindrique de la dalle limitée par la virole 7 ne comporte pas de chemisage.

Entre la virole externe 7 de la dalle et l'ouverture d'engagement de cette dalle dans le puits de cuve 18 est ménagé un espace annulaire dans lequel sont disposés des ensembles 25 comportant un ventilateur et un échangeur de chaleur pour la circulation et le refroidissement du gaz circulant dans la dalle.

Ainsi qu'il est visible sur la figure 1 les ensembles de ventilation et de refroidissement 25 et les circuits d'injection et de récupération de gaz de refroidissement sont disposés angulairement à 30° environ les uns des autres, sur la périphérie de la dalle.

Ainsi qu'il est visible sur la figure 2, chacun des circuits de distribution et de récupération de gaz comporte un ensemble de conduits verticaux 23 traversant la dalle sur toute son épaisseur et deux conduits horizontaux 24. Le conduit 24a ou conduit de distribution est relié à la sortie du ventilateur 26 de l'ensemble 25 alors que le conduit 24b est relié à l'entrée de l'échangeur de l'ensemble 25.

A l'intérieur de chacun des conduits verticaux 23 est disposé un tube 28 percé d'ouvertures 29 au niveau de chacun des conduits horizontaux 24a et 24b et de la partie supérieure de l'espace de chemisage de la dalle compris entre la semelle supérieure 5 et la partie 21b du chemisage.

La partie supérieure des tubes 28 est solidaire d'une tape 30 reposant sur la partie supérieure 21b du chemisage.

Dans la partie médiane du tube, entre les conduits horizontaux 24a et 24b est disposé un bouchon de protection 32 en béton permettant d'empêcher le passage du gaz dans la partie centrale du tube et de réaliser la protection biologique des conduits verticaux 23.

Les tubes 28 comportent à leur partie inférieure une crépine 34 pour la répartition du gaz de refroidissement dans l'espace inférieur de chemisage compris entre la semelle inférieure 6 et la partie 21a de la chemise externe.

Le tube disposé dans le conduit 23c situé le plus à l'extérieur de la dalle comporte en plus, à sa partie inférieure, des ouvertures 35 pour le refroidissement de la cuve 20 par le gaz sortant par ces ouvertures.

Les viroles 14 de passage des composants sont percées d'ouverture 37 à leur partie supérieure, au niveau de l'espace de chemisage supérieur, pour le passage du gaz.

Le dispositif représenté aux figures 1 et 2 permet un refroidissement de la dalle par circulation d'un gaz en circuit fermé, par exemple un gaz neutre tel que l'azote ou l'argon ou encore d'un gaz tel que l'air.

Le sens de circulation du gaz de refroidissement dans l'espace de chemisage et dans les circuits de distribution et de récupération a été représenté par des flèches.

On va décrire le fonctionnement et la circulation du gaz dans un des circuits de distribution et de récupération représentés à la figure 2, mais il est bien évident que les douze circuits situés angulairement à 30° autour de la dalle fonctionnement de la même façon.

Le ventilateur 26 permet d'envoyer le gaz dans le conduit horizontal 24a. Au niveau du tube 28c occupant le premier conduit vertical 23c, le flux de gaz se sépare en deux parties, une partie descendant verticalement dans le tube 28c et l'autre partie continuant à circuler dans le conduit 24a. La première partie du gaz permet un refroidissement de la surface interne de la cuve 20 en sortant par les ouvertures 35 et une distribution du gaz de refroidissement dans la partie périphérique de l'espace inférieur de chemisage.

L'autre partie du gaz est distribuée par les tubes 28 et les crépines 34 dans la partie centrale de l'espace inférieur de chemisage.

La distribution du gaz par les tubes 28 munis d'ouvertures 29 et de crépines 34 permet donc une répartition du gaz à l'intérieur de tout l'espace inférieur compris entre la semelle inférieure 6 et la chemise inférieure 21a.

Le gaz s'échauffe au contact de la surface interne du chemisage 21a dont la surface externe est en contact avec l'argon recouvrant le sodium liquide remplissant la cuve. Ce gaz assurant le refroidissement de la semelle 6 et de la partie inférieure de la dalle remonte alors par les espaces de chemisage compris entre la virole 21c et la virole interne 8 de la dalle et par les espaces compris entre les viroles de passage 14 des composants et les viroles de chemisage 22.

Ce gaz parvient dans l'espace supérieur de chemisage par les ouvertures 37 et 38 et assure dans cet espace de chemisage un léger réchauffement de la partie supérieure de la dalle et de la semelle supérieure 5.

Le gaz est alors entraîné vers le conduit horizontal de récupération 24b par l'effet d'aspiration assuré par le ventilateur 26. Pour parvenir au conduit horizontal 24b, le gaz pénètre dans la partie supérieure des tubes 28 par les ouvertures 29, circule de haut en bas dans ces tubes et en ressort dans le conduit 24b par les ouvertures 29 situées au-dessus du bouchon 32.

Le gaz fait alors retour à l'échangeur de chaleur de l'ensemble 25 où il est refroidi puir recyclé par le ventilateur 26 dans le conduit horizontal de distribution 24a.

Sur la figure 3, on voit une variante de réalisation des dispositifs de distribution et de récupération du gaz disposés à l'intérieur des conduits verticaux 23 traversant la dalle.

Dans ce mode de réalisation, les tubes 28 sont remplacés par une tige verticale 40 solidaire, à sa partie supérieure, d'une tape 41 reposant sur la partie supérieure 21b de l'ensemble de chemisage. Un bouchon en béton 42 est fixé sur la tige 40, à sa partie centrale, dans une position intermédiaire entre les conduits horizontaux 24a et 24b. Ce bouchon 42 permet l'aiguillage du gaz dans le conduit 24a et dans le conduit 24b et la protection biologique des puits verticaux 23 traversant la dalle sur toute son épaisseur.

Une crépine de répartition du gaz 43 est fixée à l'extrémité inférieure de la tige 40 et permet la répartition du gaz dans l'espace inférieur de chemisage compris entre la partie 21a de la chemise externe et la semelle inférieure 6 de la dalle.

L'ensemble constitué par le dispositif d'aiguillage représenté à la figure 3 peut tourner autour de son axe vertical ce qui permet le réglage de la direction des ouvertures de passage du gaz dans la crépine 43.

De la même façon l'orientation des tubes par rotation autour de leur axe vertical dans le mode de réalisation représenté à la figure 2 permet le réglage du débit de gaz ou la fermeture de la communication entre certains puits verticaux et les conduits horizontaux de circulation du gaz, par orientation des ouvertures 29 par rapport au canal 24.

L'avantage du mode de réalisation représenté à la figure 3 est que les pertes de charge du gaz sont plus faibles lors de sa circulation dans les conduits de la dalle. D'autre part ce dispositif mieux articulé risque moins de se coincer à l'intérieur des conduits verticaux 23.

On voit que les principaux avantages du dispositif suivant l'invention sont de permettre de refroidir et de protéger la partie inférieure de la dalle de façon efficace sans imposer que le béton de protection soit suspendu par des ancrages à l'intérieur de l'enveloppe de la dalle.

La dalle ne subit aucune modification dans sa structure et en particulier l'enveloppe métallique reste en contact par sa surface intérieure avec le béton, ce qui est favorable pour protéger cette enveloppe métallique contre la corrosion.

D'autre part, la dalle est protégée sur toutes ses faces exposées par une chemise maintenant un espace de chemisage et de circulation de gaz autour des parois de la dalle.

En particulier, en cas de panne d'un ou plusieurs dispositifs de ventilation, la dalle reste protégée. En effet, la partie inférieure du chemisage s'échauffe et transmet sa chaleur au gaz restant dans l'espace inférieur de chemisage. Ce gaz se met alors en circulation entre la partie chaude inférieure de la dalle et la partie supérieure maintenue froide où se trouve la source froide. Celle-ci peut être constituée en partie par la chemise supérieure 21b si elle n'est pas calorifugée. Le refroidissement se poursuit donc par circulation naturelle du gaz de refroidissement dans la dalle.

De la même façon si du sodium chaud sort par une fuite d'un des composants du réacteur, ce sodium tombe sur la chemise supérieure de la dalle et n'entre pas en contact avec la semelle supérieure 5.

La circulation du gaz à travers la dalle et en particulier dans la masse de celle-ci permet d'homogénéiser la température à l'intérieur de la dalle de telle sorte que sa partie inférieure est à une température plus basse et sa partie supérieure à une température plus élevée que dans les dispositifs selon l'art antérieur.

Ceci est favorable à une meilleure résistance de la dalle.

Etant donné le mode de répartition du gaz dans l'espace inférieur de chemisage et de récupération de ce gaz dans l'espace supérieur de chemisage, il est possible d'utiliser un nombre limité de circuits indépendants de répartition et de récupération de gaz. Les dispositifs 25 de mise en circulation et de refroidissement du gaz correspondants pourront être facilement installés dans la galerie, entre le bloc pile et la dalle du réacteur, ce qui réduit l'encombrement extérieur des systèmes de refroidissement.

Les conduits verticaux de circulation du gaz traversant toute la dalle sont d'autre part très utiles pour le passage de dispositifs d'observation de la semelle inférieure de la dalle et de la partie inférieure du chemisage.

L'invention ne se limite pas au mode de réalisation qui vient d'être décrit ; c'est ainsi qu'on peut imaginer des dispositifs de distribution et de récupération du gaz de refroidissement différents de ceux qui viennent d'être décrits comportant des conduits de circulation du gaz dans la partie supérieure et dans la partie inférieure de la dalle.

La structure décrite a l'avantage de procurer une homogénéisation efficace de la température de la dalle.

On peut imaginer d'autres formes de réalisation des dispositifs de répartition du gaz et des dispositifs de mise en circulation et de refroidissement de ce gaz.

On peut par exemple imaginer une ventilation utilisant de l'air prélevé dans l'atmosphère sans refroidissement et recyclage de cet air.

On peut également imaginer l'utilisation d'un dispositif de refroidissement suivant l'invention pour la protection du bouchon tournant.

Enfin le dispositif suivant l'invention s'applique non seulement dans le cas d'une dalle comportant un seul renfort constitué par une virole tronconique mais également dans le cas d'une dalle comportant une structure quelconque par exemple une dalle comportant des renforts verticaux de direction radiale. Dans ce cas, les circuits de répartition et de récupération du gaz sont intercalés entre deux renforts successifs puisque leur disposition est également radiale. La circulation du gaz ayant lieu à l'extérieur de la dalle, ces renforts n'ont aucune incidence sur cette circulation.

L'invention s'applique donc à toute dalle de forme annulaire fermant la cuve d'un réacteur refroidi par du métal liquide. L'invention peut égalemnt s'appliquer au refroidissement de bouchons tournants placés à la partie centrale de telles dalles annulaires.

**Revendications**

1. Dispositif de refroidissement de la dalle de fermeture de la cuve d'un réacteur nucléaire refroidi par un métal liquide, dalle constituée par une enveloppe métallique annulaire remplie de béton constituant la structure résistante de la dalle, disposée horizontalement et traversée sur toute son épaisseur par des ouvertures cylindriques à axe vertical pour le passage des composants du réacteur plongeant verticalement dans la cuve remplie de métal liquide de refroidissement de ce réacteur, caractérisé par le fait qu'il comporte :

une chemise externe (21) entourant l'enveloppe métallique de la dalle à l'exception de sa partie cylindrique externe (7) par l'intermédiaire de laquelle est assurée la mise en appui de la dalle sur la structure du réacteur et ménageant autour de l'enveloppe de la dalle, un espace de chemisage pour le passage d'un gaz de refroidissement,

des parois cylindriques de chemisage interne (22) des passages de composants reliées à chacune de leurs extrémités à la chemise externe, au niveau d'ouvertures prévues dans celle-ci, l'espace de chemisage des passages de composants communiquant avec l'espace de chemisage de la dalle à chacune de ses extrémités,

plusieurs dispositifs de distribution (24a, 25, 34) du gaz de refroidissement dans la partie inférieure de l'espace de chemisage située au-dessous de l'enveloppe de la dalle,

et plusieurs dispositifs de récupération (24b, 25, 28) du gaz de refroidissement dans la partie supérieure de l'espace de chemisage située au-dessus de l'enveloppe de la dalle,

le gaz de refroidissement passant de la partie inférieure à la partie supérieure de l'espace de chemisage de la dalle par les espaces de chemisage des composants et de la paroi cylindrique interne (8) de l'enveloppe de la dalle.

2. Dispositif de refroidissement suivant la revendication 1, caractérisé par le fait que les dispositifs de distribution et les dispositifs de récupération de gaz sont constitués par des ensembles de conduits verticaux (23) traversant la dalle et par des conduits horizontaux (24) joignant ces conduits verticaux constituant deux ensembles (24a et 24b) placés à des niveaux différents à l'intérieur de la dalle, l'ensemble des conduits de distribution (24a) étant à un niveau inférieur à l'ensemble des conduits de récupération du gaz et ces deux ensembles de conduits étant reliés à des dispositifs (25) de mise en circulation du gaz dans les conduits (23, 24).

3. Dispositif de refroidissement suivant la revendication 2, caractérisé par le fait que des tubes (28) solidaires de tapes (30) reposant sur la partie supérieure de la chemise externe (21) à leur partie supérieure sont disposés dans les conduits verticaux (23) sur toute la hauteur de ceux-ci et comportent des ouvertures latérales (29) au niveau de l'espace supérieur de chemisage, des conduits horizontaux (24a) de distribution et des conduits horizontaux (24b) de récupération, un bouchon (32) de fermeture et d'isolation biologique entre les conduits de répartition (24a) et les conduits de récupération (24b) et une crépine (34) de répartition à leur partie inférieure, au niveau de l'espace inférieur de chemisage.

4. Dispositif de refroidissement suivant la revendication 2, caractérisé par le fait que des tiges verticales (40) solidaires à leur partie supérieure d'une tape (41) reposant sur la partie supérieure de la chemise externe (21b) sont disposées axialement dans les conduits verticaux (23) et sont solidaires, à leur partie centrale, d'un bouchon (42) de fermeture et d'isolation biologique entre les conduits horizontaux de répartition (24a) et les conduits horizontaux (24b) de récupération du gaz et d'une crépine (43) de distribution du gaz, à leur partie inférieure, au niveau de l'espace inférieur de chemisage.

5. Dispositif de refroidissement suivant l'une quelconque des revendications 1, 2, 3 et 4, caractérisé par le fait que la partie inférieure (21a) de la chemise externe est constituée par une plaque annulaire fixée suivant son contour circulaire externe à la cuve principale (20) du réacteur.

6. Dispositif de refroidissement suivant la revendication 3, caractérisé par le fait que les tubes (28c) disposés à l'intérieur des conduits verticaux situés à la périphérie de la dalle comportent, à leur partie inférieure, des ouvertures (35) permettant l'insufflation de gaz de refroidissement sur la surface interne de la partie supérieure de la cuve principale.

7. Dispositif de refroidissement suivant la revendication 3, caractérisé par le fait que les ouvertures latérales (29) des tubes (28) sont orientées de façon à permettre un réglage de débit et une fermeture des conduits verticaux de circulation (23) du gaz par rotation du tube (28) correspondant autour de son axe.

8. Dispositif de refroidissement suivant la revendication 2, caractérisé par le fait que les dispositifs de mise en circulation (25) du gaz reliés aux conduits de circulation (24) sont disposés dans un espace annulaire ménagé entre la surface externe (7) de la dalle et la structure (18) du réacteur.

**Claims**

1. A gas cooling device for the slab closing the vessel of a nuclear reactor cooled by a liquid metal, which slab consists of an annular metal envelope filled with concrete, constituting the resisting structure of the slab, is arranged horizontally and is traversed by cylindrical ports with vertical axes passing right through the slab for the passage of the reactor components immersed vertically in the vessel filled with liquid metal for cooling this reactor, characterized by the fact that it comprises :

an outer jacket (21) surrounding the metal envelope of the slab, except for its outer cylindrical part (7), by the intermediary of which the slab rests on the structure of the reactor, and creating, around the envelope of the slab, a jacketing space for the passage of a cooling gas,

cylindrical walls (22) for internal jacketing of the passages for components, joined at each of their ends to the outer jacket, in the region of ports provided in the latter, the jacketing space for the passage of components communicating with the jacketing space of the slab at each of its ends,

several devices (24a, 25, 34) for distributing cooling gas in the lower part of the jacketing space, located below the envelope of the slab,

and several devices (24b, 25, 28) for recovering the cooling gas from the upper part of the jacketing space, located above the envelope of the slab, the cooling gas passing from the lower part to the upper part of the jacketing space of the slab via the jacketing spaces of the components and of the inner cylindrical wall (8) of the envelope of the slab.

2. The cooling device according to claim 1, characterized by the fact that the gas distribution devices and the gas recovery devices consist of sets of vertical ducts (23) passing through the slab, and of horizontal ducts (24) joining these vertical ducts, constituting two assemblies (24a and 24b) located at different levels inside the slab, the assembly of distribution ducts (24a) being at a lower level than the assembly of gas recovery ducts, and these two assemblies of ducts being connected to devices (25) for circulating the gas in the ducts (23, 24).

3. The cooling device according to claim 2, characterized by the fact that tubes (28), firmly fixed to stoppers (30) resting on the upper part of the outer jacket (21) in their upper part, are arranged over the whole height of the vertical ducts (23) and possess lateral ports (29) in the region of the upper jacketing space, horizontal distribution ducts (24a) and horizontal recovery ducts (24b), a plug (32) for closure and biological isolation between the distribution ducts (24a) and the recovery ducts (24b), and a distribution strainer (34) in their lower part, in the region of the lower jacketing space.

4. The cooling device according to claim 2, characterized by the fact that vertical rods (40), firmly fixed in their upper part to a stopper (41) resting on the upper part of the outer jacket (21b), are arranged axially in the vertical ducts (23) and are firmly fixed in their central part to a plug (42) for closure and biological isolation between the horizontal gas distribution ducts (24a) and the horizontal gas recovery ducts (24b), and to a gas distribution strainer (43), in their lower part, in the region of the lower jacketing space.

5. The cooling device according to any one of claims 1, 2, 3 and 4, characterized by the fact that the lower part (21a) of the outer jacket consists of an annular plate fixed around its outer circular contour to the main vessel (20) of the reactor.

6. The cooling device according to claim 3, characterized by the fact that the tubes (28c), arranged inside the vertical ducts located at the periphery of the slab, possess, in their lower part, ports (35) making it possible to blow in cooling gas over the inner surface of the upper part of the main vessel.

7. The cooling device according to claim 3, characterized by the fact that the lateral ports (29) in the tubes (28) are orientated so as to make it possible to adjust the gas flow and to close the vertical gas circulation ducts (23) by rotating the corresponding tube (28) about its axis.

8. The cooling device according to claim 2, characterized by the fact that the gas circulation devices (25), connected to the circulation ducts (24) are located in an annular space created between the outer surface (7) of the slab and the structure (18) of the reactor.

**Patentansprüche**

1. Kühleinrichtung für den Druckbehälterdeckel eines durch ein flüssiges Metall gekühlten Kernreaktors, wobei der Deckel durch eine ringförmige, metallische Umhüllung gebildet ist, die mit die feste Struktur des Deckels bildendem Beton gefüllt ist, horizontal angeordnet und über seine gesamte Dicke von zylindrischen Öffnungen mit vertikaler Achse für die Durchführung von Reaktorbestandteilen durchdrungen ist, die vertikal in den mit flüssigem Metall zur Kühlung dieses Reaktors gefüllten Behälter tauchen, gekennzeichnet durch :

eine Außenummantelung (21), die die metallische Umhüllung des Deckels mit Ausnahme seines zylindrischen Außenteils (7) umgibt, mittels der die Auflage des Deckels auf der Reaktorstruktur sichergestellt ist, und die um die Umhüllung des Deckels einen Mantelzwischenraum für das Hindurchtreten eines Kühlgases ausspart,

zylindrische Innenmantelwände (22) der Durchführungen von Bestandteilen, die mit ihren Enden jeweils mit der Außenummantelung in der Höhe von in dieser vorgesehenen Öffnungen verbunden sind, wobei der Mantelzwischenraum der Durchführungen von Bestandteilen an seinen Enden jeweils mit dem Mantelzwischenraum des Deckels in Verbindung steht,

mehrere Versorgungseinrichtungen (24a, 25, 34) für Kühlgas im unteren Teil des Mantelzwischenraums, der unterhalb der Umhüllung des Deckels liegt,

und mehrere Rückgewinnungseinrichtungen (24b, 25, 28) für das Kühlgas im oberen Teil des Mantelzwischenraums, der oberhalb der Umhüllung des Deckels liegt, wobei das Kühlgas vom unteren Teil zum oberen Teil des Mantelzwischenraums des Deckels durch die Mantelzwischenräume der Bestandteile und der zylindrischen Innenwand (8) der Umhüllung des Deckels strömt.

2. Kühleinrichtung nach Anspruch 1, dadurch gekennzeichnet, daß die Versorgungseinrichtungen und die Gaswiedergewinnungseinrichtungen durch Gruppen von den Deckel durchdringenden vertikalen Kanälen (23) und durch horizontale Kanäle (24) gebildet sind, die diese vertikalen Kanäle verbinden und zwei Gruppen (24a und 24b) bilden, die in unterschiedlichen Höhen im Inneren des Deckels liegen, wobei die Gruppe der Versorgungskanäle (24a) in einer geringeren Höhe zur Gruppe der Wiedergewinnungskanäle für das Gas ist und diese beiden Kanalgruppen mit Einrichtungen (25) zur Zirkulation des Gases in den Kanälen (23, 24) verbunden sind.

3. Kühleinrichtung nach Anspruch 2, dadurch gekennzeichnet, daß Rohre (28), die an ihrem oberen Teil fest mit auf dem oberen Teil der Außen ummantelung (21) ruhenden Pfropfen (30) verbunden sind, in den vertikalen Kanälen (23) auf deren gesamter Höhe angeordnet sind und seitliche Öffnungen (29) in Höhe des oberen Mantelzwischenraums, der horizontalen Versorgungskanäle (24a) und der horizontalen Wiedergewinnungskanäle (24b), einen Stopfen (32) zum Verschließen und zur biologischen Isolierung zwischen den Verteilungskanälen (24a) und den Wiedergewinnungskanälen (24b) und ein Brausekorbelement (34) an ihrem unteren Teil in der Höhe des unteren Mantelzwischenraums aufweisen.

4. Kühleinrichtung nach Anspruch 2, dadurch gekennzeichnet, daß vertikale Stangen (40), die an ihrem oberen Teil mit einem auf dem oberen Teil der Außenummantelung (21b) ruhenden Pfropfen (41) fest verbunden sind, axial in den vertikalen Kanälen (23) angeordnet sind und an ihrem zentralen Teil mit einem Pfropfen (42) zum Verschließen und zur biologischen Isolierung zwischen den horizontalen Verteilungskanälen (24a) und den horizontalen Kanälen (24b) zur Wiedergewinnung des Gases und an ihrem unteren Teil in der Höhe des unteren Mantelzwischenraums mit einem Brausekorbelement (43) zur Verteilung des Gases fest verbunden sind.

5. Kühleinrichtung nach einem beliebigen der Ansprüche 1, 2, 3 und 4, dadurch gekennzeichnet, daß der untere Teil (21a) der Außenummantelung durch eine ringförmige Platte gebildet ist, die gemäß ihrer kreisförmigen Außenkontur am Hauptbehälter (20) des Reaktors befestigt ist.

6. Kühleinrichtung nach Anspruch 3, dadurch gekennzeichnet, daß die im Inneren der vertikalen Kanäle angeordneten Rohre (28c), die an der Peripherie des Deckels liegen, an ihrem unteren Teil Öffnungen (35) aufweisen, die das Einblasen von Kühlgas auf die Innenfläche des oberen Teils des Hauptbehälters gestatten.

7. Kühleinrichtung nach Anspruch 3, dadurch gekennzeichnet, daß die seitlichen Öffnungen (29) der Rohre (28) derart orientiert sind, daß sie eine Mengenregelung und ein Verschließen der vertikalen Zirkulationskanäle (23) des Gases durch entsprechende Drehung des Rohrs (28) um seine Achse gestatten.

8. Kühleinrichtung nach Anspruch 2, dadurch gekennzeichnet, daß die mit den Zirkulationskanälen (24) verbundenen Einrichtungen (25) zur Zirkulierung des Gases in einem ringförmigen Zwischenraum angeordnet sind, der zwischen der Außenfläche (7) des Deckels und der Struktur (18) des Reaktors ausgespart ist.

Fig 1
7
14
2
22
24
25b
30
3
1
14
24
25a
A
A
21c
8
2

Fig 2
25
7
28c
5
21b
28b
24b
14
37
30
28a
32
12
21c
26
29
29
29
38
14
10
8
24a
15
16
23c
18
35
21
23b
22
21a
34
23a
6
20
19

Fig 3
41
21b
40
24b
23
42
40
24a
43
6
21a